Europäisches Patentamt

European Patent Office

Office européen des brevets

(19)

(11) Veröffentlichungsnummer : **0 291 498 B1**

(12) # EUROPÄISCHE PATENTSCHRIFT

(45) Veröffentlichungstag der Patentschrift :
27.03.91 Patentblatt 91/13

(51) Int. Cl.⁵ : **F27B 3/16,** F27D 1/18,
C21C 5/52

(21) Anmeldenummer : **88890113.9**

(22) Anmeldetag : **09.05.88**

(54) **Elektroofen, wie Lichtbogenofen oder Plasmaofen.**

(30) Priorität : **15.05.87 AT 1233/87**

(43) Veröffentlichungstag der Anmeldung :
**17.11.88 Patentblatt 88/46**

(45) Bekanntmachung des Hinweises auf die
Patenterteilung :
**27.03.91 Patentblatt 91/13**

(84) Benannte Vertragsstaaten :
**CH DE ES FR GB IT LI SE**

(56) Entgegenhaltungen :
**DE-B- 1 216 900
DE-C- 3 522 559
FR-A- 855 303
GB-A- 2 033 863
US-A- 1 818 239**

(73) Patentinhaber : **VOEST-ALPINE
INDUSTRIEANLAGENBAU GESELLSCHAFT
m.b.H.
Turmstrasse 44
A-4020 Linz (AT)**

(72) Erfinder : **Zajicek, Ernst
Donaulände 10
A-4100 Ottensheim (AT)**
Erfinder : **Riegler, Ernst
Gröllerstrasse 5
A-4470 Enns (AT)**
Erfinder : **Mühlbauer, Johann
Harterfeldstrasse 9/11
A-4060 Leonding (AT)**

(74) Vertreter : **Wolfram, Gustav, Dipl.-Ing.
Schwindgasse 7 P.O. Box 205
A-1041 Wien (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Elektroofen, wie Lichtbogenofen oder Plasmaofen, mit einem an einer Ofenplattform angeordneten Ofengefäß, das von einem mittels eines Deckelhubwerkes heb- und senkbaren und mittels eines Deckelschwenkwerkes von einer Stellung über dem Ofengefäß in eine Stellung seitlich des Ofengefäßes und zurück schwenkbaren Ofendeckel bedeckt ist, wobei zum Heben, Senken und Schwenken des Ofendeckels ein seitlich des Ofengefäßes schwenkbar gelagertes Deckeltragwerk mit mindestens einem Deckeltragarm vorgesehen ist.

Ein Elektroofen dieser Art ist aus der DE-C-35 22 559 und der DE-B-1 216 900 bekannt. Bei diesen Öfen ist jeweils der Deckel um eine seitlich des Ofens liegende Säule, an der das Deckeltragwerk gelagert ist, verschwenkbar. Bei dieser bekannten Konstruktion liegt zwar diese Säule nahe am Ofengefäß, jedoch ergibt sich gerade hierdurch der Nachteil, daß der Deckel um einen sehr großen Winkel verschwenkt werden muß, wenn das Ofengefäß zur Gänze freigegeben werden soll, z.B. zum Zweck des Chargierens. Die zu den Elektroden führenden Hochstromseile werden hierdurch einer starken Torsionsbelastung ausgesetzt, wodurch ihre Lebensdauer verkürzt wird.

Die das Deckeltragwerk tragende Säule ist bei den bekannten Öfen jeweils vom Ofen in Richtung zum Transformator versetzt angeordnet, um die Hochstrombahnen bzw. die Länge des Stromweges vom Trafo bis zur Elektrode so kurz wie möglich zu halten. Hierdurch ergeben sich Nachteile, wie ein relativ großer Weg des Masseschwerpunktes des Deckels beim Verschwenken des Deckels, sowie für einen Ofen mit Wiegerahmen eine ungünstige Krafteinleitung der Deckelkräfte in den Wiegerahmen, so daß der Wiegerahmen an der Stelle der Krafteinleitung extra verstärkt ausgebildet sein muß und somit eine große Masse aufweist.

Die Erfindung bezweckt die Vermeidung dieser Nachteile und Schwierigkeiten und stellt sich die Aufgabe, einen Elektroofen der eingangs beschriebenen Art zu schaffen, bei dem trotz einer dem Ofengefäß möglichst nahen Anordnung der Schwenkachse für den Ofendeckel die Hochstromseile beim Verschwenken des Ofendeckels nur gering verdreht werden. Zudem soll der Masseschwerpunkt des Systems Deckel – Deckeltragwerk beim Verschwenken des Deckels einen möglichst kurzen Weg zurücklegen, wobei die Distanz des Masseschwerpunktes zu der die Kipp- und Vertikalkräfte in die Ofenplattform einleitenden Stelle möglichst gering gehalten werden soll.

Eine weitere Aufgabe der Erfindung ist darin zu sehen, daß bei einem Ofen mit Wiegerahmen die die Kipp- und Vertikalkräfte in die Ofenplattform bzw. den Wiegerahmen übertragende Stelle an einem Ort der Ofenplattform bzw. des Wiegerahmens angeordnet werden kann, an der die Ofenplattform bzw. der Wiegerahmen von Haus aus bereits verstärkt ausgebildet ist. Hierdurch soll eine konstruktiv einfache und vor allem leichtere Konstruktion des Wiegerahmens möglich sein.

Diese Aufgaben werden erfindungsgemäß dadurch gelöst, daß das Deckeltragwerk mit einer an ihm angelenkten Schwinge mit der Ofenplattform verschwenkbar verbunden ist und daß das Deckeltragwerk weiters unter Bildung einer Koppel entweder mittels einer weiteren Schwinge unter Bildung eines Gelenkvierecks an der Ofenplattform angelenkt oder mit einem Punkt entlang einer an der Ofenplattform angeordneten Führung unter Bildung einer Schubschwinge geführt ist.

Ein konstruktiv besonders einfacher Schwenkantrieb wird vorteilhaft dadurch verwirklicht, daß eine der Schwingen bzw. die Schwinge mittels eines Schwenkantriebes betätigbar ist.

Zweckmäßig ist die Anlenkstelle mindestens einer Schwinge an der Ofenplattform als vom Deckeltragwerk und Ofendeckel hervorgerufene Kippkräfte und Vertikalkräfte aufnehmende Säule ausgebildet.

Gemäß einer besonders platzsparenden Konstruktion ist zweckmäßig die Anlenkstelle der Schwinge an der Ofenplattform als Kippkräfte und Vertikalkräfte aufnehmende Rollendrehverbindung ausgebildet.

Gemäß einer anderen Ausführungsform, die besonders robust ist, weist die Anlenkstelle der Schwinge am Deckeltragwerk zwei im vertikalen Abstand voneinander angeordnete, Kippkräfte aufnehmende Radiallager und mindestens ein mit den Radiallagern fluchtendes Axiallager zur Aufnahme der vertikalen Kräfte auf.

Vorzugsweise ist die Ofenplattform als etwa rechteckförmiger Wiegerahmen ausgebildet, wobei der bzw. die Anlenkpunkt(e) der Schwinge(n) an einer Ecke bzw. an benachbarten Ecken des Wiegerahmens angeordnet ist (sind). Ein besonderer Vorteil dieser Konstruktion ist darin zu sehen, daß der an seinen Ecken von Haus aus besonders steif ausgebildete Wiegerahmen für die Krafteinleitung der vom Deckel bzw. Deckeltragwerk herrührenden Kräfte keine aufwendige Versteifung des Wiegerahmen erfordert.

Vorzugsweise ist das Deckeltragwerk gegenüber der Ofenplattform in vertikaler Richtung unbeweglich gelagert und ist das Deckelhubwerk zwischen dem Deckeltragarm und dem Ofendeckel angeordnet, wodurch eine Hub- und Senkbewegung des Deckeltragwerkes vermieden werden kann, so daß das Deckeltragwerk besonders einfach und robust gebaut werden kann.

Gemäß einer bevorzugten Variante ist bei Verwirklichung einer Schubschwinge die Führung geradlinig ausgebildet und zu der dem Deckeltragwerk benachbarten Seite des Ofengefäßes etwa tangential ausgerichtet.

Hierbei weist zweckmäßig das Deckeltragwerk einen Tragwerkkasten auf, an dem mindestens ein über den Deckel ragender Deckeltragarm befestigt ist, wobei an dem Tragwerkkasten ein in Richtung zum Ofengefäß auskragender Arm, an dem die Gelenkstelle für die Anlenkung der Schwinge angeordnet ist, vorgesehen ist, und ein Führungsarm am Tragwerkkasten befestigt ist, an dessen freiem auskragendem Ende ein in die Führung eingreifender Mitnehmer, vorzugsweise eine Rolle, montiert ist, wobei die Führung etwa in Höhe der Ofenplattform und der Tragwerkkasten oberhalb derselben angeordnet sind. Hierdurch ist es möglich, den Tragwerkkasten von den Antriebsteilen frei zu halten, um das Elektrodenhubwerk durch den Kasten hindurchtreten zu lassen, wodurch Führungsrollen für das Elektrodenhubwerk sowohl an der Ober- als auch Unterseite des Tragwerkkastens ohne Behinderung zugänglich sind.

Zur Vermeidung von Schwingungen des Deckeltragwerkes, die durch Lichtbogenkräfte und durch die Bewegung der Elektroden verursacht werden können, ist vorteilhaft zwischen dem Deckeltragwerk und dem Ofengefäß und/oder der Ofenplattform mindestens ein Stellglied zur Abstützung des Deckeltragwerkes vorgesehen, wobei zweckmäßig dieses Stellglied als Zentrierglied ausgebildet ist.

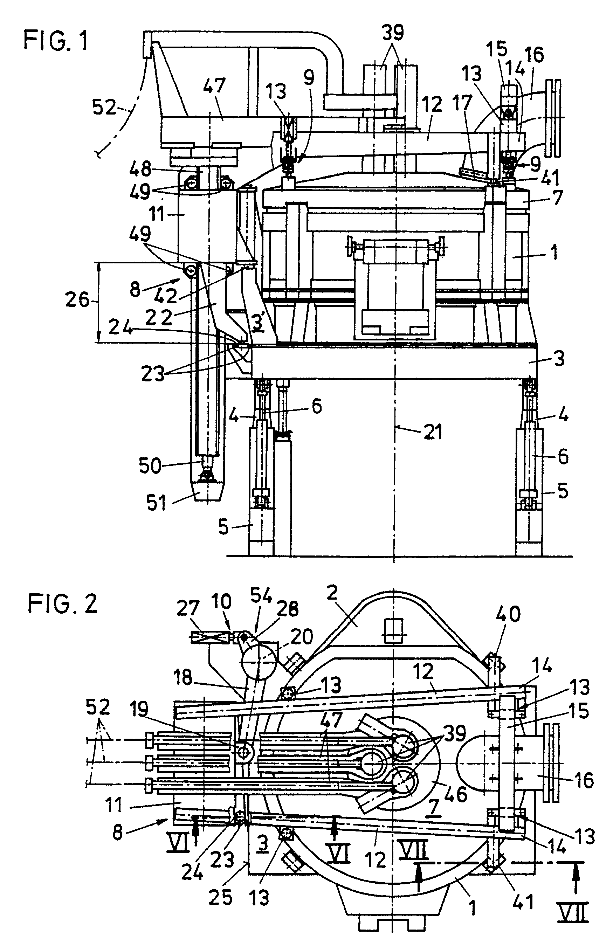

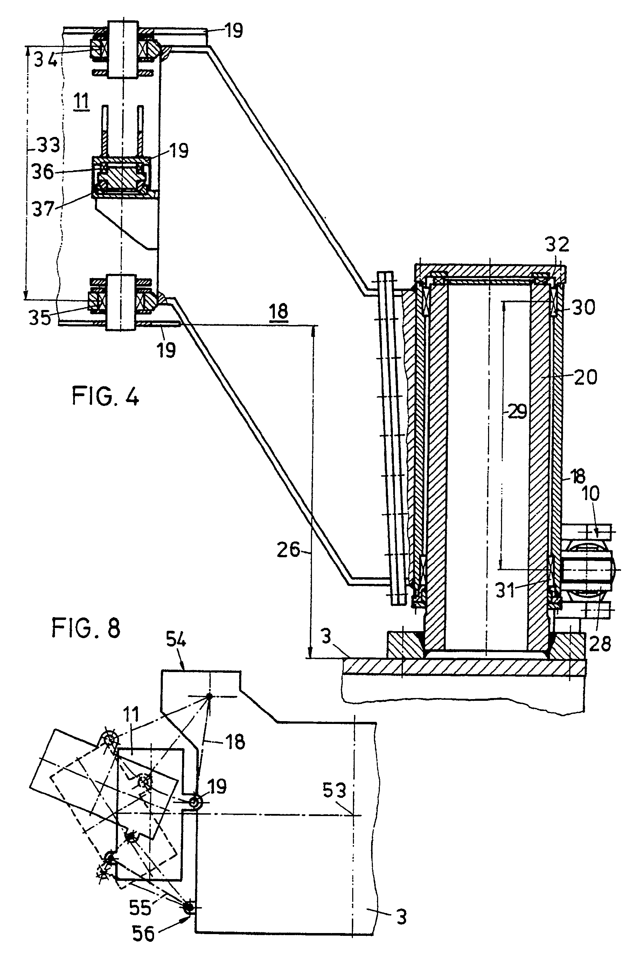

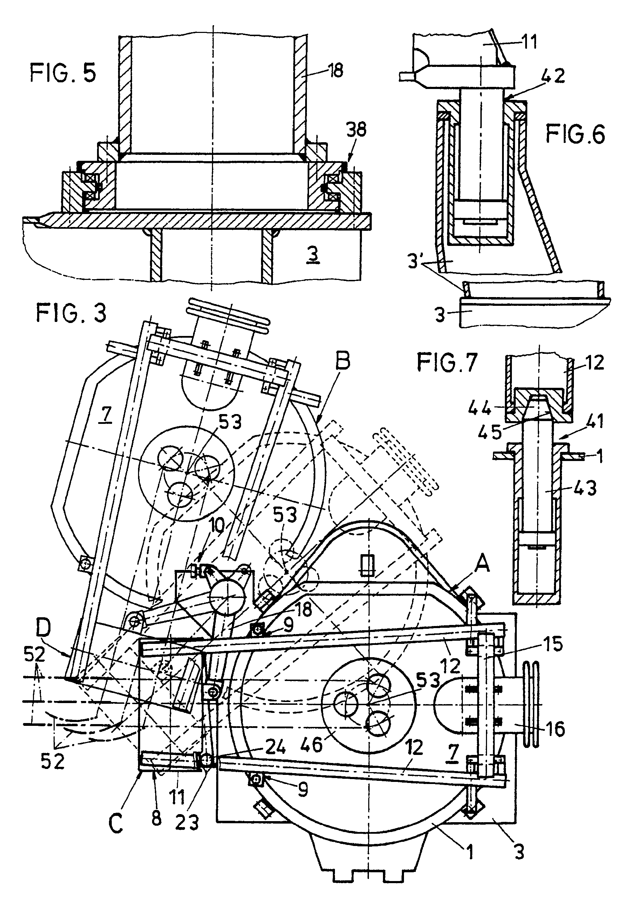

Die Erfindung ist nachfolgend an zwei Ausführungsbeispielen anhand der Zeichnung näher erläutert, wobei Fig. 1 eine Seitenansicht eines Elektroofens und Fig. 2 eine Draufsicht auf den Elektroofen gemäß der ersten Ausführungsform zeigen. In Fig. 3 ist in zu Fig. 2 analoger Darstellung das Verschwenken des Ofendeckels in unterschiedlichen Positionen veranschaulicht. Fig. 4 zeigt eine teilweise geschnittene Detailansicht gemäß Pfeil IV der Fig. 2. Fig. 5 stellt eine Variante in zu Fig. 4 analoger Schnittdarstellung dar. In den Fig. 6 und 7 sind Details im Schnitt gemäß den Linien VI-VI und VII-VII der Fig. 2 veranschaulicht. Fig. 8 zeigt eine zweite Ausführungsform eines Elektroofens in zu Fig. 2 analoger, jedoch nur schematischer Darstellung.

Ein Ofengefäß 1 eines Elektrolichtbogenofens mit exzentrischem Bodenabstich 2 ruht auf einem Wiegerahmen 3, der auf Wälzbahnen 4, die am oberen Ende von am Fundament angeordneten Betonwangen 5 angeordnet sind, gelagert ist. Zum Kippen des Ofengefäßes 1 dienen einerseits an den Betonwangen 5 und andererseits am Wiegerahmen 3 angeordnete Druckmittelzylinder 6.

Das Ofengefäß 1 ist während des Betriebes des Ofens von einem wassergekühlten Ofendeckel 7 bedeckt. Dieser Ofendeckel 7 ist mittels eines Deckeltragwerkes 8 heb- und senkbar sowie schwenkbar, wobei das Deckeltragwerk 8 mit einem Deckelhubwerk 9 zum Heben und Senken des Ofendeckels 7 ausgestattet ist und ein Deckelschwenkwerk 10 zum Schwenken des Ofendeckels 7 von einer Betriebsstellung A oberhalb des Ofengefäßes 1 in eine seitlich des Ofengefäßes 1 liegende Chargierstellung B bzw. retour vorgesehen ist.

Das Deckeltragwerk 8 weist einen Tragwerkasten 11 auf, an dessen Oberseite zwei über den Ofendeckel 7 ragende Deckeltragarme 12 befestigt sind. Zwischen den Deckeltragarmen 12 und dem Ofendeckel 7 sind an vier Stellen Hubzylinder 13 angeordnet, die das Deckelhubwerk 9 bilden. Auf den auskragenden Enden 14 der Deckeltragarme 12 ist mittels einer Quertraverse 15 ein Rauchgaskrümmer 16, der an eine Abzugsöffnung 17 des Ofendeckels 7 anschließt, abstützbar.

Der Tragwerkkasten 11 ist gemäß der in den Fig. 1 und 2 dargestellten Ausführungsform als Koppel einer Schubschwinge ausgebildet, deren Schwinge 18 mit einem Ende an einem am Tragwerkkasten 11 in Richtung zum Ofengefäß 1 auskragenden Arm 19 angelenkt und mit ihrem anderen Ende an einer am Wiegerahmen 3 starr montierten Säule 20, die etwa parallel zur Ofenmittelachse 21 gerichtet ist, schwenkbar gelagert ist. Am Tragwerkkasten 11 ist weiters ein Führungsarm 22 starr befestigt, an dessen frei auskragendem Ende ein in eine am Wiegerahmen 3 angeordnete Führung 23 eingreifender Mitnehmer 24, der z.B. als Rolle ausgebildet ist, montiert ist. Die Führung 23 ist vorzugsweise geradlinig ausgebildet und erstreckt sich etwa parallel oder im spitzen Winkel zu der Seite 25 des rechteckig ausgebildeten Wiegerahmens 3, an der das Deckeltragwerk 8 angeordnet ist. Die Führung 23 und der Mitnehmer 24 liegen etwa in Höhe des Wiegerahmens 3. Da der Tragwerkkasten 11 oberhalb des Wiegerahmens 3 angeordnet ist, weisen sowohl der Führungsarm 22 als auch die Schwinge 18 eine vom Wiegerahmen 3 bis zum Tragwerkkasten 11 reichende vertikale Erstreckung 26 auf.

Zum Verschwenken des Ofendeckels 7 ist die Schwinge 18 mittels eines Druckmittelzylinders 27 um die Säule 20 verschwenkbar, wobei der Druckmittelzylinder 27 einerseits am Wiegerahmen 3 und andererseits an einem Fortsatz 28 der Schwinge 18 angreift.

Die Schwinge 18 ist an der Säule 20 über zwei in vertikalem (bei Normallage des Elektroofens) Abstand 29 angeordnete Radiallager 30, 31 sowie ein am oberen Ende der Säule 20 angeordnetes Axiallager 32 drehbar gelagert, so daß vom Ofendeckel 7 bzw. Deckeltragwerk 8 herrührende Kipp- und Vertikalkräfte in die Säule 20 und damit in den Wiegerahmen 3 eingeleitet werden können.

Die Lagerung der Schwinge 18 an dem am Tragwerkkasten 11 angeordneten Arm 19 ist ebenfalls über zwei im vertikalen Abstand 33 voneinander angeordnete, Kippkräfte aufnehmende Radiallager 34, 35 und ein zu diesen beiden Radiallagern fluchtend angeordnetes und zwischen den Radiallagern liegendes Axiallager 36 zur Aufnahme der vertikalen Kräfte bewerkstelligt, wobei das Axiallager 36 über eine sphärische Lagerung 37 am Tragwerkkasten 11 abgestützt ist.

Anstelle der Lagerung der Schwinge 18 am Wiegerahmen 3 mittels einer Säule 20 könnte die Schwinge auch mittels einer sogenannten Rollendrehverbindung 38 am Wiegerahmen gelagert sein, wie sie in Fig. 5 gezeigt ist.

Um Schwingungen des Deckeltragwerkes 8, die durch Lichtbogenkräfte bzw. durch eine Bewegung der Elektroden 39 verursacht werden können, zu vermeiden, sind zwischen den Deckeltragarmen 12 und dem Ofengefäß 1 zwei hydraulisch beaufschlagte Stellglieder 40, 41 zur Abstützung der Deckeltragarme 12 am Ofengefäß 1 und zwischen dem Wiegerahmen 3, d.h. einer am Wiegerahmen 3 befestigten Konsole 3', und dem Tragwerkkasten 11 ein weiteres Stellglied 42 (Fig. 6) vorgesehen. Ein zwischen dem Ofendeckel 7 und einem Deckeltragarm 12 angeordnetes Stellglied 41 ist als Zentrierglied, welches in Fig. 7 dargestellt ist, ausgebildet und dient zur exakten Fixierung der Deckeltragarme 12 gegenüber dem Ofengefäß 1. Ein hydraulisch beaufschlagbarer Stempel 43 weist einen konischen Kopf 44 auf, der in eine korrespondierende konische Ausnehmung 45, die am Deckeltragarm 12 angeordnet ist, einsetzbar ist.

Die durch das im Zentrum des Ofendeckels 7 angeordnete Deckelherz 46 geführten Elektroden 39 sind von Elektrodentragarmen 47 gehalten, die von den Elektroden 39 in Richtung zum Tragwerkkasten 11 gerichtet sind und mit vertikalen Stützen 48 durch den Tragwerkkasten 11 hindurchragen. Zur Führung dieser Stützen 48 sind an der Ober- und Unterseite des Tragwerkkastens 11 Führungsrollen 49 angeordnet. Das Heben und Senken der Elektroden 39 wird mittels Druckmittelzylinder 50 bewerkstelligt, die innerhalb der Stützen 48 angeordnet sind und mit ihren nach außen ragenden Enden an einem am Tragwerkkasten 11 angesetzten, nach unten gerichteten U-förmigen Bügel 51 angreifen.

Die Funktion des Elektroofens beim Verschwenken des Ofendeckels ist folgende :

Zunächst werden die Elektroden 39 aus dem Ofengefäß 1 gehoben oder vom Elektroofen überhaupt entfernt. Sodann werden die Hubzylinder 13 zum Heben des Ofendeckels beaufschlagt, wobei vorher jedoch die Stellglieder 40, 41, 42, die zur Vermeidung von Schwingungen der Deckeltragarme 12 den Ofendeckel 7 gegenüber den Deckeltragarmen 12 fixieren, entlastet werden. Nach Heben des Ofendeckels 7 um einen vorbestimmten Betrag wird der Druckmittelzylinder 27, der die Schwinge 18 betätigt, beaufschlagt, wodurch der als Koppel wirkende Tragwerkkasten 11 eine Bewegung aus der in Fig. 2 dargestellten Ausgangslage C in die in Fig. 3 mit dünnen Vollinien dargestellte ausgeschwenkte Lage D vollführt. Während dieser Bewegung gleitet der Mitnehmer entlang der am Wiegerahmen 3 angeordneten Führung 23.

Wie aus Fig. 3 ersichtlich, vollführt der Tragwerkkasten infolge der Schubschwingenausbildung der hierbei bewegten Teile nur eine geringere Winkelbewegung aus, als er z.B. bei einer Schwenkung um eine ortsfeste Achse ausführen würde, wodurch eine Schonung der an den Elektrodentragarmen 47 befestigten und zu einem nicht näher dargestellten, benachbart angeordneten Transformator führenden Hochstromseile 52 infolge eines geringeren Verschwenkens derselben erzielt wird.

Weiters vollführt der Masseschwerpunkt 53 des Ofendeckels keine Kreisbewegung, sondern eine gegenüber einer Kreisbewegung verkürzte Bewegung. Die Einleitung der während des Deckelschwenkvorganges vorhandenen Kipp- und Vertikalkräfte erfolgt ausschließlich über die Schwinge 18 in den Wiegerahmen 3. Da die Lagerung der Schwinge 18 an einer Ecke 54 des rechteckigen Wiegerahmens 3 gewählt ist, ist eine günstige Krafteinleitung in den Wiegerahmen 3 sichergestellt und der Wiegerahmen, der an seinen Ecken ohnehin versteift ausgebildet ist, muß nicht mit einer zusätzlichen Versteifungskonstruktion versehen werden.

Gemäß der in Fig. 8 dargestellten Ausführungsform bildet der Tragwerkkasten die Koppel eines Gelenkviereckes, wobei der Tragwerkkasten 11 mittels zweier Schwingen 18 und 55 an Ecken 54, 56 des Wiegerahmens 3 angelenkt ist, der den Steg des Gelenkviereckes bildet. Hierbei können die Kipp- und Vertikalkräfte über nur eine (18) der Schwingen 18 und 55 in den Wiegerahmen 3 eingeleitet werden oder auch über beide.

Die Erfindung beschränkt sich nicht auf die dargestellten Ausführungsbeispiele, sondern kann in verschiedener Hinsicht modifiziert werden. So läßt sich die erfindungsgemäße Ausgestaltung des Deckeltragwerkes auch für Plasmaöfen einsetzen. Weiters ist es auch möglich, das Deckeltragwerk für ortsfeste Öfen, also Öfen mit ortsfester, z.B. als Fundament ausgebildeter Ofenplattform zu verwenden.

## Ansprüche

1. Elektroofen, wie Lichtbogenofen oder Plasmaofen, mit einem an einer Ofenplattform (3) angeordneten Ofengefäß (1), das von einem mittels eines Deckelhubwerkes (9) heb- und senkbaren und mittels eines Deckelschwenkwerkes (10) von einer Stellung über dem Ofengefäß (1) in eine Stellung seitlich des Ofengefäßes (1) und zurück schwenkbaren Ofendeckel (7) bedeckt ist, wobei zum Heben, Senken und Schwenken des Ofendeckels (7) ein seitlich des Ofengefäßes (1) schwenkbar gelagertes Deckeltragwerk (8) mit mindestens einem Deckeltragarm (12) vorgesehen ist, dadurch gekennzeichnet, daß das Deckeltragwerk (8) mit einer an ihm angelenkten Schwinge (18) mit der Ofenplattform (3) verschwenkbar verbunden ist und daß das Deckeltragwerk (8) weiters unter Bildung einer Koppel entweder mittels einer weiteren Schwinge (55) unter Bildung eines Gelenkvierecks an der Ofenplattform (3) angelenkt oder mit einem Punkt (24) entlang einer an der Ofenplattform (3) angeordneten Führung (23) unter Bildung einer Schubschwinge geführt ist.

2. Elektroofen nach Anspruch 1, dadurch gekennzeichnet, daß eine der Schwingen (18, 55) bzw. die Schwinge (18) mittels eines Schwenkantriebes (27) betätigbar ist.

3. Elektroofen nach Anspruch 1 oder 2, dadurch gekennzeichnet, daß die Anlenkstelle mindestens einer Schwinge (18) an der Ofenplattform (3) als vom Deckeltragwerk (8) und Ofendeckel (7) hervorgerufene Kippkräfte und Vertikalkräfte aufnehmende Säule (20) ausgebildet ist.

4. Elektroofen nach Anspruch 1 oder 2, dadurch gekennzeichnet, daß die Anlenkstelle der Schwinge (18) an der Ofenplattform (3) als Kippkräfte und Vertikalkräfte aufnehmende Rollendrehverbindung (38) ausgebildet ist (Fig. 5).

5. Elektroofen nach einem oder mehreren der Ansprüche 1 bis 4, dadurch gekennzeichnet, daß die Anlenkstelle der Schwinge (18) am Deckeltragwerk (8) zwei im vertikalen Abstand (33) voneinander angeordnete, Kippkräfte aufnehmende Radiallager (34, 35) und mindestens ein mit den Radiallagern (34, 35) fluchtendes Axiallager (36) zur Aufnahme der vertikalen Kräfte aufweist.

6. Elektroofen nach einem oder mehreren der Ansprüche 1 bis 5, dadurch gekennzeichnet, daß die Ofenplattform als etwa rechteckförmiger Wiegerahmen (3) ausgebildet ist, wobei der bzw. die Anlenkpunkt(e) der Schwinge(n) (18, 55) an einer Ecke (54) bzw. an benachbarten Ecken (54, 56) des Wiegerahmens angeordnet ist (sind).

7. Elektroofen nach einem oder mehreren der Ansprüche 1 bis 6, dadurch gekennzeichnet, daß das Deckeltragwerk (8) gegenüber der Ofenplattform (3) in vertikaler Richtung unbeweglich gelagert ist und das Deckelhubwerk (9) zwischen dem Deckeltragarm (12) und dem Ofendeckel (7) angeordnet ist.

8. Elektroofen nach einem oder mehreren der Ansprüche 1 bis 7, dadurch gekennzeichnet, daß bei Verwirklichung einer Schubschwinge die Führung (23) geradlinig ausgebildet ist und zu der dem Deckeltragwerk (8) benachbarten Seite des Ofengefäßes (1) etwa tangential ausgerichtet ist.

9. Elektroofen nach Anspruch 8, dadurch gekennzeichnet, daß das Deckeltragwerk (8) einen Tragwerkkasten (11) aufweist, an dem mindestens ein über den Deckel ragender Deckeltragarm (12) befestigt ist, wobei an dem Tragwerkkasten (11) ein in Richtung zum Ofengefäß (1) auskragender Arm (19), an dem die Gelenkstelle für die Anlenkung der Schwinge (18) angeordnet ist, vorgesehen ist, und ein Führungsarm (22) am Tragwerkkasten (11) befestigt ist, an dessen freiem auskragendem Ende ein in die Führung (23) eingreifender Mitnehmer (24), vorzugsweise eine Rolle, montiert ist, wobei die Führung (23) etwa in Höhe der Ofenplattform (3) und der Tragwerkkasten (11) oberhalb derselben angeordnet sind.

10. Elektroofen nach einem oder mehreren der Ansprüche 1 bis 9, dadurch gekennzeichnet, daß zwischen dem Deckeltragwerk (8) und dem Ofengefäß (1) und/oder der Ofenplattform (3) mindestens ein Stellglied (40, 41, 42) zur Abstützung des Deckeltragwerkes (8) vorgesehen ist.

11. Elektroofen nach Anspruch 10, dadurch gekennzeichnet, daß das Stellglied (41) als Zentrierglied ausgebildet ist (Fig. 7).

## Claims

1. Electric furnace, such as electric arc furnace or plasma furnace, with a furnace vessel (1) arranged on a furnace platform (3) and covered by a furnace lid (7) liftable and lowerable by means of a lid lifting mechanism (9) and pivotable from a position above the furnace vessel (1) into a position lateral of the furnace vessel (1) and back by means of a lid pivoting mechanism (10), a lid supporting mechanism (8) pivotably arranged laterally of the furnace vessel (1) and comprising at least one lid supporting bracket (12) being provided for lifting, lowering and pivoting the furnace lid (7), characterised in that the lid supporting mechanism (8) is pivotably connected with the furnace platform (3) with an oscillating crank (18) hinged thereto and that the lid supporting mechanism (8), moreover, under formation of a coupler, either is hinged to the furnace platform (3) by means of a further oscillating crank (55) under formation of a four bar linkage or is guided with one point (24) along a guiding means (23) arranged on the furnace platform (3) under formation of a thrust crank.

2. Electric furnace according to claim 1, characterised in that one of the oscillating cranks (18, 55) or the oscillating crank (18) is actuatable by means of a pivot drive (27).

3. Electric furnace according to claim 1 or 2, characterised in that the hinge site of at least one oscillating crank (18) on the furnace platform (3) is designed as a column (20) accommodating tilting forces and vertical forces caused by the lid supporting mechanism (8) and the furnace lid (7).

4. Electric furnace according to claim 1 or 2, characterised in that the hinge site of the oscillating crank (18) on the furnace platform (3) is designed as roller rotating connection (38) accommodating tilting forces and vertical forces (Fig. 5).

5. Electric furnace according to one or more of claims 1 to 4, characterised in that the hinge site of the oscillating crank (18) on the lid supporting mechanism (8) comprises two radial bearings (34, 35) spaced from each other at a vertical distance (33) and accommodating tilting forces and at least one thrust bearing (36) in alignment with the radial bearings (34, 35) for accommodating vertical forces.

6. Electric furnace according to one or more of claims 1 to 5, characterised in that the furnace platform is designed as an approximately rectangular rocking frame (3) with the hinge point(s) of the oscillating crank(s) (18, 55) arranged at a corner (54) or at neighbouring corners (54, 56) of the rocking frame.

7. Electric furnace according to one or more of claims 1 to 6, characterised in that the lid supporting mechanism (8) is arranged relative to the furnace platform (3) so as to be immovable in the vertical direction and the lid lifting mechanism (9) is arranged between the lid supporting bracket (12) and the furnace lid (7).

8. Electric furnace according to one or more of claims 1 to 7, characterised in that, when realising a thrust crank, the guiding means (23) is designed in straight line form and is directed approximately tangential to the side of the furnace vessel (1) neighbouring the lid supporting mechanism (8).

9. Electric furnace according claim 8, characterised in that the lid supporting mechanism (8) is provided with a supporting box (11), to which at least one lid supporting arm (12) projecting over the lid is fastened, an arm (19) cantilevering in direction towards the furnace vessel (1), on which the hinge site for hinging the oscillating crank (18) is arranged, being provided on the supporting box (11), and a guiding arm (22) is fastened to the supporting box (11), to the free cantilevering end of which a catch means (24), preferably a roller, engaging the guiding means (23) is mounted, the guiding means (23) being arranged approximately at the level of the furnace platform (3) and the supporting box (11) above the same.

10. Electric furnace according to one or more of claims 1 to 9, characterised in that between the lid supporting mechanism (8) and the furnace vessel (1) and/or the furnace platform (3) at least one actuating unit (40, 41, 42) for supporting the lid supporting mechanism (8) is provided.

11. Electric furnace according to claim 10, characterised in that the actuating unit (41) is designed as centering element (Fig. 7).

## Revendications

1. Four électrique, tel que four à arc électrique ou four à plasma, avec une cuve de four (1) disposée sur une plate-forme de four (3) recouverte par un couvercle de four (7) pouvant être levé et descendu par un mécanisme de levage du couvercle (9) et pouvant être pivoté au moyen d'un mécanisme de pivotement du couvercle (10) entre une position située au-dessus de la cuve du four (1) et une position sur le côté de la cuve du four (1), et inversement, le levage, la descente et le pivotement du couvercle de four (7) étant assurés par un mécanisme porteur du couvercle (8) monté pivotant sur le côté de la cuve du four (1) avec au moins un bras porteur du couvercle (12), caractérisé en ce que le mécanisme porteur du couvercle (8) est relié à la plate-forme du four (3) par une manivelle (18) articulée à son niveau et en ce que le mécanisme porteur du couvercle (8), de plus, formant une bielle, est soit articulé sur la plate-forme du four (3) avec une autre manivelle (55) pour former un quadrilatère articulé, soit guidé en un point le long d'une glissière (23) montée sur la plate-forme du four (3) pour former un mécanisme bielle-manivelle.

2. Four électrique selon la revendication 1, caractérisé en ce que l'une des deux manivelles (18, 55) ou la seule manivelle (18) peut être actionnée par un mécanisme de pivotement (27).

3. Four électrique selon la revendication 1 ou 2, caractérisé en ce que le point d'articulation d'au moins une manivelle (18) sur la plate-forme du four (3) se présente sous la forme d'une colonne (20) encaissant les forces verticales et de basculement appliquées par le mécanisme porteur du couvercle (8) et le couvercle du four (7).

4. Four électrique selon la revendication 1 ou 2, caractérisé en ce que le point d'articulation de la manivelle (18) sur la plate-forme du four (3) se présente sous la forme d'une liaison pivotante à galet (38) encaissant les forces verticales et de basculement (figure 5).

5. Four électrique selon une ou plusieurs des revendications 1 à 4, caractérisé en ce que le point d'articulation de la manivelle (18) sur le mécanisme porteur du couvercle (8) présente deux paliers radiaux (34, 35) écartés l'un de l'autre d'une distance verticale (33) et encaissant les forces de basculement, et d'au moins un palier axial (36) aligné avec les paliers radiaux (34, 35) pour encaisser les forces verticales.

6. Four électrique selon une ou plusieurs des revendications 1 à 5, caractérisé en ce que la plate-forme du four se présente sous la forme d'un berceau (3) de forme sensiblement rectangulaire, le ou les points d'articulation de la ou des manivelles (18, 55) se situant au coin (54) ou aux coins adjacents (54, 56) du berceau.

7. Four électrique selon une ou plusieurs des revendications 1 à 6, caractérisé en ce que le mécanisme porteur du couvercle (8) est monté de manière à ne pas pouvoir se déplacer verticalement par rapport à la plate-forme du four (3) et en ce que le mécanisme de levage du couvercle (9) est installé entre le bras porteur du couvercle (12) et le couvercle du four (7).

8. Four électrique selon une ou plusieurs des revendications 1 à 7, caractérisé en ce que, pour réaliser le mécanisme bielle-manivelle, la glissière (23) est de forme rectiligne et est orientée de manière approximativement tangentielle au côté de la cuve du four (1) adjacent au mécanisme porteur du couvercle (8).

9. Four électrique selon la revendication 8, caractérisé en ce que le mécanisme porteur du couvercle (8) possède un caisson porteur (11) sur lequel est fixé au moins un bras porteur de couvercle (12) saillant au-dessus du couvercle et qui porte un bras (19) saillant dans la direction de la cuve du four (1) sur lequel se trouve le point d'articulation de la manivelle (18) et un bras de guidage (22) dont l'extrémité libre porte un entraîneur (24), de préférence un galet, s'engageant dans la glissière (23), celle-ci se situant approximativement à la hauteur de la plate-forme du four (3) tandis que le caisson porteur (11) se trouve au-dessus.

10. Four électrique selon une ou plusieurs des revendications 1 à 9, caractérisé en ce qu'il existe entre le mécanisme porteur du couvercle (8) et la cuve du four et/ou la plate-forme du four (3) au moins un organe de positionnement (40, 41, 42) pour l'appui du mécanisme porteur du couvercle (8).

11. Four électrique selon la revendication 10, caractérisé en ce que l'organe de positionnement (41) est un organe de centrage (figure 7).

FIG. 1

FIG. 2

FIG. 4

FIG. 8

FIG. 5

FIG. 3

FIG.6

FIG.7